# EUROPÄISCHE PATENTSCHRIFT

(11) **EP 3 880 399 B1**
(45) Veröffentlichungstag und Bekanntmachung des Hinweises auf die Patenterteilung: **04.10.2023**
(21) Anmeldenummer: 19794484.6
(22) Anmeldetag: 22.10.2019
(51) Int. Cl.: B23K 26/082, B23K 26/08, B23K 26/38, B23K 26/402, H01M 4/04, B23K 101/16, B23K 101/36, B23K 103/16

(54) **VERFAHREN ZUM SCHNEIDEN VON EINEM KONTINUIERLICHEN BATTERIEELEKTRODENMATERIAL ZUR HERSTELLUNG VON BATTERIEELEKTRODEN**
METHOD FOR CUTTING A CONTINUOUS BATTERY ELECTRODE MATERIAL IN ORDER TO PRODUCE BATTERY ELECTRODES
PROCÉDÉ POUR LA DÉCOUPE D'UN MATÉRIAU D'ÉLECTRODE DE BATTERIE CONTINU POUR FABRIQUER DES ÉLECTRODES DE BATTERIE

(30) Priorität: 16.11.2018 DE 102018219619
(43) Veröffentlichungstag der Anmeldung: 22.09.2021
(73) Patentinhaber: VOLKSWAGEN AKTIENGESELLSCHAFT, 38440 Wolfsburg (DE)
(72) Erfinder: BÖHM, Dennis, 38302 Wolfenbüttel (DE); BREUER, Alexander, 29227 Celle (DE); RATHMANN, Sven, 38108 Braunschweig (DE)
(86) Internationale Anmeldenummer: PCT/EP2019/078771
(87) Internationale Veröffentlichungsnummer: WO 2020/099076

(56) Entgegenhaltungen:
- CN-A- 104 942 445
- JP-A- 2017 084 691
- US-A1- 2018 079 035

## Beschreibung

Die Erfindung betrifft ein Verfahren zum Schneiden von einem kontinuierlichen Batterieelektrodenmaterial zur Herstellung von Batterieelektroden, siehe Anspruch 1.

Im Zusammenhang mit der Fertigung von Batterien werden zunächst einzelne Batterieelektroden gefertigt, welche anschließend für verschiedenste Batterietypen zu einem Verbund angeordnet werden. Die Fertigung von solchen Elektroden wird dabei beispielsweise über eine Vereinzelung der Batterieelektroden aus einem Elektrodencoil realisiert. Die Vereinzelung wird dabei häufig mittels eines Schneidevorgangs durchgeführt, wobei die Bearbeitung mit einem Laserschneidegerät eine mögliche Alternative darstellt. Aus dem Stand der Technik sind dabei unterschiedliche Ansätze bereits allgemein bekannt. Folgend werden zwei Ansätze näher vorgestellt.

Aus der Druckschrift DE 10 2013 203 810 A1 ist ein Verfahren und eine Vorrichtung zum Schneiden eines Elektrodenbands als bekannt zu entnehmen. Das Elektrodenband ist dabei für eine Energiespeicherzelle vorgesehen, wobei in einem ersten Verfahrensschritt das Elektrodenband durch eine Laserschneidvorrichtung hindurch transportiert wird und wobei während des ersten Verfahrensschritts innerhalb der Laserschneidvorrichtung mittels eines Laserstrahls eine Mehrzahl von Ableiterfahnen des Elektrodenbands geschnitten werden und wobei ferner der Laserstrahl im ersten Verfahrensschritt ausschließlich innerhalb des Elektrodenbands geführt wird. Es ist dabei nicht vorgesehen, eine Transportvorrichtung umfassend mindestens zwei Transporteinheiten bereitzustellen, wobei zumindest ein Maß von zumindest einer der zumindest zwei Transporteinheiten zumindest in einem Bereich kleiner als zumindest ein Maß von dem kontinuierlichen Batterieelektrodenmaterial ist, sodass das Batterieelektrodenmaterial mittels der zumindest einen Schneidvorrichtung in diesem Bereich und/oder zwischen zwei Transporteinheiten frei bearbeitbar ist.

Aus der Druckschrift WO 2015/124971 A1 ist ein Schneidverfahren als bekannt zu entnehmen. Insbesondere wird ein Schneidverfahren zum Schneiden eines kontinuierlichen Separatorfolienmaterials in einer zwischen zwei nicht rechteckigen Elektroden enthaltenen Schneidezone unter Verwendung von Lasereinrichtungen vom Festphasentyp offenbart. Auf dem Material wird dabei eine erste Schneidlinie ausgeführt, die dann von einer zweiten Schneidlinie in einem Schnittpunkt geschnitten wird, der in einem Zwischenabschnitt der ersten Schnittlinie angeordnet ist, mit einer Schnittpunktrichtung, die senkrecht zu der ersten Schnittlinie an dem Schnittpunkt ist. Es ist dabei nicht vorgesehen, eine Transportvorrichtung umfassend mindestens zwei Transporteinheiten bereitzustellen, wobei zumindest ein Maß von zumindest einer der zumindest zwei Transporteinheiten zumindest in einem Bereich kleiner als zumindest ein Maß von dem kontinuierlichen Batterieelektrodenmaterial ist, sodass das Batterieelektrodenmaterial mittels der zumindest einen Schneidvorrichtung in diesem Bereich und/oder zwischen zwei Transporteinheiten frei bearbeitbar ist.

Die Druckschrift JP 2017 84691 A (offenbarend alle Merkmalen/Schritten des Oberbegriffes des Anspruchs 1) beschreibt eine Vorrichtung und ein Verfahren zur Herstellung von Batterieelektroden aus einem kontinuierlichen Bandmaterial. Dabei wird ein Verfahren zur Herstellung eines Elektrodenblechs durch Ausschneiden aus einem beschichteten Blech mittels eines Lasers vorgeschlagen.

Aus der US 2018/0 079 035 A1 ist ein Verfahren zur Herstellung von Batterieelektroden bekannt. Dabei wird ein Originalblatt kontinuierlich zugeführt und ein rechteckiges Elektrodenblatt mit einer Lasche mit einem normalen Laserstrahl während des kontinuierlichen Transports aus dem Originalblatt ausgeschnitten.

Die Druckschrift CN 104942445 B beschreibt ein Verfahren zur Herstellung von Batterieelektroden aus einem kontinuierlichen Bandmaterial. Dabei wird das Bandmaterial mittels Lasern beschnitten und in Form der Batterieelektroden gebracht.

Allgemein besteht ein Interesse nicht nur bei den vorgestellten Ansätzen darin, die Taktzeit bei der Vereinzelung der Batterieelektroden aus dem Elektrodencoil stetig zu erhöhen, um so letztendlich einen Kostenvorteil zu erreichen. Insbesondere Ansätze bei der mechanischen Vereinzelung oder Laservereinzelung von Batterieelektroden, welche mit einem Bandstillstand einhergehen, sollen zukünftig vermieden werden. Beim mechanischen Vereinzeln besteht dabei die Notwendigkeit eines Bandstillstands, da es sich um ein kontaktbehaftetes Schneiden handelt. Beim Laservereinzeln besteht die Notwendigkeit eines Bandstillstandes vor allem darin, einen Schneidevorgang auf einem Transferband zu vermeiden oder allgemein schlechte Schnittkanten zu vermeiden. Auch soll durch ein Bandstillstand bei der Laservereinzelung eine Zerstörung des Transferbandes vermieden werden. In diesem Zusammenhang wird häufig ein Schnittspalt in der Anlage und eine beidseitige Absaugung benötigt. Auch besteht ein allgemeines Interesse bei der Fertigung von solchen Elektroden darin, den Ausschuss so gering wie möglich zu halten, da ein geringer Ausschuss letztlich auch die Effizienz des Herstellungsprozesses erhöht. Dies kann unter anderem dadurch erreicht werden, indem eine mechanische und thermische Beanspruchung des Elektrodencoils während des Schneidprozesses verringert wird. Auch eine verbesserte Qualität der Schnittkanten an sich führt zu einem geringeren Ausschuss und somit zu einer Reduktion der Herstellungskosten. Mit Hinblick auf die Qualität der zu erstellenden Produkte ist das verwendete Lasersystem von heutigen sogenannten On-the-Fly-Schnitten mit einem Scanner und herkömmlichen Schnittspalt entweder zu langsam oder zu energieintensiv, um eine qualitativ hochwertige Elektrodenschnittkante herzustellen. Dabei muss zudem der Scanner einen großen Bearbeitungsbereich abdecken, sodass physikalisch bedingt der Spotdurchmesser größer ist und somit mehr Energie in die Aktivmaterialschicht eingetragen werden muss. Dies führt ebenfalls zu einer schlechteren Schnittkante, sodass ein auftretender Qualitätsmangel zu einem erhöhten Ausschuss führen kann. Beim Laserschnitt mit einem Scanner ergibt sich beispielsweise ein rechnerischer Schnittspalt bei einem mittelgroßen Zellformat von bis zu 100 mm. Dies ist unter Umständen möglich, birgt jedoch Probleme der Substrat-Durchbiegung. Dies hat wiederum zur Folge, dass das Substrat außerhalb der Fokuslage liegen könnte und somit auch hiermit zusammenhängend eine Qualitätsschwankung auftreten kann.

Der Erfindung liegt nun die Aufgabe zugrunde, ein Verfahren zum Schneiden von einem kontinuierlichen Batterieelektrodenmaterial bereitzustellen, welches besonders effizient und kostengünstig anwendbar ist.

Gemäß der Erfindung wird ein Verfahren zum Schneiden von einem kontinuierlichen Batterieelektrodenmaterial zur Herstellung von Batterieelektroden gemäß Anspruch 1 bereitgestellt. Solch ein Verfahren umfasst dabei die folgenden Schritte: Bereitstellen von einem kontinuierlichen Batterieelektrodenmaterial, Bereitstellen von einer Transportvorrichtung, welche ausgelegt ist das kontinuierliche Batterieelektrodenmaterial in einer Bewegungsrichtung von einem Startpunkt über einen Bearbeitungsbereich zu einem Endpunkt zu bewegen, wobei die Transportvorrichtung zumindest zwei Transporteinheiten umfasst, Bereitstellen von zumindest einer Schneidvorrichtung, welche ausgelegt ist das kontinuierliche Batterieelektrodenmaterial zu bearbeiten und Bearbeiten des kontinuierlichen Batterieelektrodenmaterials während einer Bewegung in der Bewegungsrichtung mittels der zumindest einen Schneidvorrichtung, sodass zumindest ein Bearbeitungsschritt an dem kontinuierlichen Batterieelektrodenmaterial durchgeführt wird, wobei zumindest ein Maß von zumindest einer der zumindest zwei Transporteinheiten zumindest in einem Bereich kleiner als zumindest ein Maß von dem kontinuierlichen Batterieelektrodenmaterial ist, sodass das Batterieelektrodenmaterial mittels der zumindest einen Schneidvorrichtung in diesem Bereich und/oder zwischen zwei Transporteinheiten frei bearbeitbar ist. Mittels des vorgestellten Verfahrens ist es aufgrund der besonderen Durchführung der einzelnen Schritte möglich, eine erhöhte Taktzeit bei der Vereinzelung der Batterieelektroden aus dem Batterieelektrodenmaterial zu erreichen. Auch kann eine Verringerung einer mechanischen und thermischen Beanspruchung des Batterieelektrodenmaterials während des Schneidprozesses erreicht werden. Diese Vorteile werden insbesondere aufgrund der in Bezug zueinander gewählten Maße realisierbar, da somit eine freie und unmittelbare Bearbeitung des Batterieelektrodenmaterials ermöglicht wird. Ein kostengünstiges Verfahren ist somit besonders gut zu erreichen. Mittels des vorgestellten Verfahrens können sowohl positive als auch negative Batterieelektroden gefertigt werden.

Die zuvor genannten Vorteile gelten soweit übertragbar in gleicher Weise für den vorgestellten Gegenstand.

Der Begriff des kontinuierlichen Batterieelektrodenmaterials ist dabei so zu verstehen, dass zwar das Material insgesamt mehr Ausgangsmaterial für die Herstellung von Batterieelektroden als lediglich für eine einzige Produkteinheit umfasst, aber letztlich dennoch eine endliche und in sich geschlossene Einheit darstellen kann. Mit anderen Worten kann in dem Verfahren kontinuierlich eine gewisse Menge des kontinuierlichen Batterieelektrodenmaterials bereitgestellt werden, sodass während eines Bewegungsablaufs entsprechend mehrere Batterieelektroden hergestellt werden können.

Weitere bevorzugte Ausgestaltungen der Erfindung ergeben sich aus den Unteransprüchen genannten Merkmalen.

Erfindungsgemäß ist vorgesehen, dass die zumindest eine Schneidvorrichtung eine Laserschneidvorrichtung, umfassend zumindest ein Laserschneidelement, ist. Eine Laserschneidvorrichtung mit zumindest einem Laserschneidelement ist besonders geeignet, einen effizienten und fehlerfreien Schneideprozess zu gewährleisten. Die einzelnen Laserschneideelemente können dabei beispielsweise dort platziert werden, wo eine unmittelbare und somit effiziente Bearbeitung des kontinuierlichen Batterieelektrodenmaterial vorgesehen ist. Diese Vorteile werden insbesondere aufgrund der in Bezug zueinander gewählten Maße realisierbar, da somit eine freie und unmittelbare Bearbeitung des Batterieelektrodenmaterials ermöglicht wird. Somit kann eine Verbesserung der Schnittkantenqualität einer lasergeschnittenen Batterieelektrode beispielsweise durch Verkleinerung des Spotdurchmessers des Laserelementes in der Fokussierung erreicht werden.

Auch ist in einer weiteren bevorzugten Ausgestaltung der Erfindung vorgesehen, dass das kontinuierliche Batterieelektrodenmaterial in Form eines Coils bereitgestellt wird, wobei eine Materialbahn des Coils in einer Bewegungsrichtung von einem Startpunkt über einen Bearbeitungsbereich zu einem Endpunkt mittels der Transportvorrichtung bewegt wird und wobei die Materialbahn während des Transportvorgangs seriell die zumindest zwei Transporteinheiten passiert. Die Form eines Coils bietet die Möglichkeit, das Batterieelektrodenmaterial schnell und effizient beispielsweise in definierten Materialbahnen bereitzustellen, sodass gemäß den vorgestellten Verfahrensschritten ein kostengünstiger Herstellungsprozess ermöglicht wird.

Ferner ist entsprechend der Erfindung vorgesehen, dass die zumindest zwei Transporteinheiten in Form von Transportbändern, insbesondere Vakuumbändern, bereitgestellt werden und das zumindest eine Maß von zumindest einem der zumindest zwei Transportbändern und das zumindest eine Maß von dem kontinuierlichen Batterieelektrodenmaterial jeweils ein Breitenmaß ist, sodass das kontinuierliche Batterieelektrodenmaterial zumindest mit einem Ende einer Breitseite über das zumindest eine Transportband hinausragt. Mit anderen Worten ist das eine Transportband schmaler als das Batterieelektrodenmaterial, sodass nicht auf dem Transportband, beispielsweise in Form eines Vakuumbandes, geschnitten wird. Die zuvor genannten Vorteile lassen sich somit noch besser erreichen. Insbesondere wird somit eine Beschädigung der Transporteinheiten vermieden, sodass ein stabiler und effizienter Prozess ermöglicht wird, welcher zudem kostengünstig betrieben werden kann.

Erfindungsgemäß ist vorgesehen, dass die zumindest zwei Transporteinheiten in Form von Transportbändern, insbesondere Vakuumbändern, bereitgestellt werden und wobei das zumindest eine Maß von zumindest einem der zumindest zwei Transportbändern jeweils ein Breitenmaß und/oder ein Innenmaß ist und das zumindest eine Maß von dem kontinuierlichen Batterieelektrodenmaterial jeweils ein Breitenmaß und/oder ein Innenmaß ist, sodass das kontinuierliche Batterieelektrodenmaterial zumindest mit einem Ende einer Breitseite über das zumindest eine Transportband hinausragt und/oder zumindest in einem Innenbereich über das zumindest eine Transportband hinausragt.

Auch ist in einer weiteren bevorzugten Ausgestaltung der Erfindung vorgesehen, dass zumindest eine Sensorvorrichtung, umfassend zumindest ein Sensorelement, bereitgestellt wird, welche ausgelegt ist, das kontinuierliche Batterieelektrodenmaterial vor und/oder während einer Bewegung in Bewegungsrichtung von einem Startpunkt über einen Bearbeitungsbereich zu einem Endpunkt kontinuierlich und/oder zumindest während eines Zeitpunkts zu erfassen und auszurichten, sodass das kontinuierliche Batterieelektrodenmaterial in Bezug auf zumindest eine Transporteinheit und zumindest einem Bearbeitungsschritt ausgerichtet wird. Eine benutzerdefinierte Ausrichtung mittels der Sensorvorrichtung kann zusätzlich dafür sorgen, dass eine hohe Taktzeit ermöglicht wird, da die von der Vorrichtung generierten Informationen entsprechend für eine Steuerung des Prozesses vorliegen und verwendet werden können. Insbesondere kann somit die vorgesehene Relation der zuvor genannten Maße zueinander während der gesamten Bewegung erfasst und eingehalten werden, sodass eine besonders zuverlässige Herstellung von Batterieelektroden im Sinne der zuvor genannten Vorteile ermöglicht wird.

Ferner ist in einer weiteren bevorzugten Ausgestaltung der Erfindung vorgesehen, dass zumindest eine Absaugungsvorrichtung, umfassend zumindest ein Absaugelement, bereitgestellt wird. Auf diese Weise können die verschiedenen Bearbeitungsschritte sauber und damit zuverlässig durchgeführt werden, um somit eine stetig hohe Qualität des Herstellungsprozesses zu sichern. Während einer Bearbeitung des kontinuierlichen Batterieelektrodenmaterials auftretende Produktionsrückstände, die aufgrund eines Schneideprozesses mittels einer Laserschneidvorrichtung beispielsweise in Form von Emissionen (unter anderem in Form von Partikeln) auftreten können, können somit unmittelbar entfernt werden, sodass allgemein auftretende Produktionsrückstände oder Produktionsnebenprodukte keine störende Wirkung auf die eigentlichen Bearbeitungsschritte entfalten können. Ein kostengünstiges Verfahren ist somit noch besser zu gewährleisten.

Außerdem ist in einer weiteren bevorzugten Ausgestaltung der Erfindung vorgesehen, dass eine Vorschubgeschwindigkeit des kontinuierlichen Batterieelektrodenmaterials zumindest teilweise als eine Schneidvorschubgeschwindigkeit genutzt wird. Somit können einzelne Bearbeitungsschritte in Form von Schneidevorgängen des Batterieelektrodenmaterials noch schneller durchgeführt werden, sodass eine kostengünstige Produktion aufgrund einer erhöhten Taktzeit realisierbar ist.

Auch ist in einer weiteren bevorzugten Ausgestaltung der Erfindung vorgesehen, dass eine Vorschubgeschwindigkeit benutzerdefiniert eingestellt wird, insbesondere auf einen Wert von 10 m/s. Das vorgestellte Verfahren kann somit auch für unterschiedliche Batterieelektrodenmaterialien und deren Eigenschaften in Bezug auf die Schneidevorgänge optimal ausgelegt werden, sodass eine hohe Qualität bei gleichzeitig maximal möglicher Geschwindigkeit ermöglicht wird. Eine Optimierung der Kostenstruktur kann somit stets mittels des vorgestellten Verfahrens direkt und unmittelbar erreicht werden.

Ferner ist in einer weiteren bevorzugten Ausgestaltung der Erfindung vorgesehen, dass eine Vorschubgeschwindigkeit von zumindest zwei Transporteinheiten in Bezug aufeinander benutzerdefiniert eingestellt wird, insbesondere auf einen im Wesentlichen gleichen Wert eingestellt wird. Das vorgestellte Verfahren lässt sich somit im Sinne der zuvor genannten Vorteile weiter optimieren. Insbesondere kann eine reibungslose und gleichmäßige Taktung bei einer hohen Prozessgeschwindigkeit realisiert werden, sodass die Produktionskosten, beispielsweise bezogen auf eine einzelne Batterieelektrode, gering gehalten werden können.

Schlussendlich ist in einer weiteren bevorzugten Ausgestaltung der Erfindung vorgesehen, dass zusätzlich zumindest eine weitere Transporteinheit bereitgestellt wird, wobei diese weitere zumindest eine Transporteinheit in Form eines Transportbandes, insbesondere eines Vakuumbandes, bereitgestellt wird und ein Maß bezogen auf eine Breitseite aufweist, welches gleichgroß oder größer ist als ein Maß des kontinuierlichen Batterieelektrodenmaterials, insbesondere ein Maß bezogen auf eine Breitseite des kontinuierlichen Batterieelektrodenmaterials. Diese weitere Transporteinheit kann beispielsweise an einem Endpunkt der Bearbeitungsschritte vorgesehen werden, sodass ein Abtransport der gefertigten Batterieelektroden beispielsweise hin zu einer weiteren Bearbeitungsstation oder zu einer Verpackungsstation ermöglicht wird.

Das vorgestellte Verfahren kann in jeglichen Batteriezellenanwendungen, wie beispielsweise einem Stationärspeicher, Consumer-Batterien et cetera, angewendet werden beziehungsweise zum Einsatz kommen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Draufsicht auf ein kontinuierliches Batterieelektrodenmaterial, welches gemäß einem vorgestellten Verfahren entsprechend der Erfindung bearbeitet wird;
- Figur 2: eine schematische Draufsicht auf ein kontinuierliches Batterieelektrodenmaterial, welches gemäß einer nicht zur Erfindung gehörenden Alternative von dem vorgestellten Verfahren bearbeitet wird.

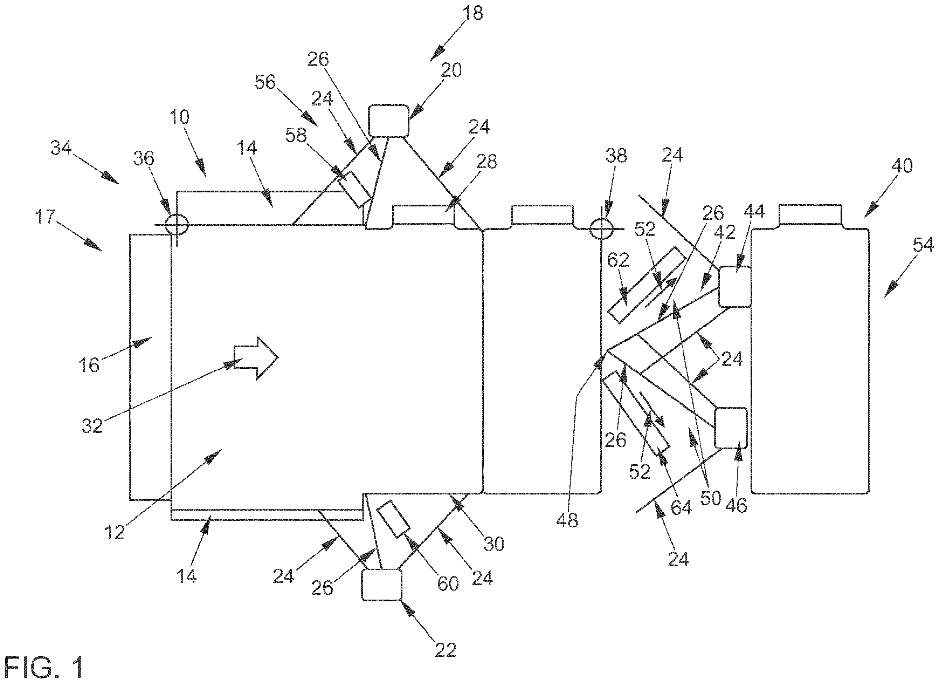

Figur 1 zeigt eine schematische Draufsicht auf ein kontinuierliches Batterieelektrodenmaterial 10, welches gemäß einem vorgestellten Verfahren bearbeitet wird. Das kontinuierliche Batterieelektrodenmaterial 10 weist dabei einen beschichteten Bereich 12 in der Mitte auf und außen jeweils einen nicht beschichteten Bereich 14. Bezogen auf die Bildebene ist links unterhalb des kontinuierlichen Batterieelektrodenmaterials 10 eine erste Transporteinheit 16 in Form eines Vakuumbands dargestellt. Diese erste Transporteinheit 16 ist Bestandteil einer Transportvorrichtung 17, wobei weitere Bestandteile von dieser Transportvorrichtung 17 im weiteren Verlauf vorgestellt werden. In dieser Draufsicht ist zu erkennen, dass ein Breitenmaß von dieser ersten Transporteinheit 16 schmaler ist als ein Breitenmaß von dem kontinuierlichen Batterieelektrodenmaterial 10. Mit anderen Worten überlappt das im Wesentlichen mittig auf der ersten Transporteinheit 16 aufliegende kontinuierliche Batterieelektrodenmaterial 10 an den jeweiligen Rändern der ersten Transporteinheit 16, sodass das überlappende Material dort frei bearbeitbar ist. Insbesondere kann also auch eine freie Bearbeitung in den nicht beschichteten Bereichen 14 und/oder in einem Übergangsbereich zwischen beschichteten Bereich 12 und nicht beschichteten Bereichen 14 ermöglicht werden, sodass hier eine entsprechende Fokussierung von Prozessparametern, beispielsweise im Zusammenhang mit dem einzukoppelnden Laser, benutzerdefiniert im Sinne einer besonders hohen Qualität des Schneidprozesses gewährleistet werden kann. Zum Zwecke der Bearbeitung ist eine Laserschneidvorrichtung 18 dargestellt, welche an beiden Seiten des kontinuierlichen Batterieelektrodenmaterials 10 zwei Laserschneidelemente 20, 22 umfasst. Dabei ist die Laserschneidvorrichtung 18 eine spezielle Art einer Schneidvorrichtung. Die Laserschneidelemente 20, 22 weisen dabei jeweils einen begrenzten Aktionsradius auf, welcher durch Hilfslinien 24 schematisch dargestellt ist. Innerhalb dieses jeweiligen Aktionsradius kann mit Hilfe von einem schematisch dargestellten Laserstrahls 26 das kontinuierliche Batterieelektrodenmaterial 10 im Sinne eines Schneidprozesses bearbeitet werden. Das Laserschneidelement 20 schneidet dabei einen oberen Elektrodenbereich 28 inklusive Ableiterfähnchen und Radien und das Laserschneidelement 22 schneidet dabei einen unteren Elektrodenbereich 30 auf eine entsprechende Ziellänge inklusive Radien. Ein Blockpfeil 32 weist zudem eine Bewegungsrichtung des kontinuierlichen Batterieelektrodenmaterials 10 auf. Mit anderen Worten wird das kontinuierliche Batterieelektrodenmaterial 10 von links nach rechts bezogen auf die Bildebene mittels der ersten Transporteinheit 16 in Form eines Vakuumbands bewegt, sodass während dieser Bewegung mittels der Laserschneidvorrichtung 18 mit den beiden Laserschneidelementen 20, 22 entsprechende Schneidprozesse gemäß dem vorgestellten Verfahren durchgeführt werden können. Weiterhin ist eine Sensorvorrichtung 34, umfassend ein erstes Sensorelement 36 und ein zweites Sensorelement 38, schematisch dargestellt. Das erste Sensorelement 36 ist insbesondere für eine Bahnkantensteuerung des kontinuierlichen Batterieelektrodenmaterials 10 vorgesehen. Dabei kann beispielsweise eine Ober- und Unterseite kontrolliert werden. Das erste Sensorelement 36 kann beispielsweise in Form eines optischen Sensors vorliegen. Das zweite Sensorelement 38 ist für eine Erfassung eines Transversalschnitts des kontinuierlichen Batterieelektrodenmaterials 10 vorgesehen. Mittels des Transversalschnitts werden letztendlich einzelne Batterieelektroden 40 aus dem bereits vorbearbeiteten kontinuierlichem Batterieelektrodenmaterial 10 herausgeschnitten.

Gemäß dem vorgestellten Verfahren ist in diesem Ausführungsbeispiel eine zweite Transporteinheit 42 vorgesehen, welche eine im Wesentlichen dreieckige Form mit einer mittig entgegen der Bewegungsrichtung ausgerichtete Spitze aufweist. Auch diese zweite Transporteinheit 42 kann beispielsweise als ein Vakuumband ausgeführt sein. An einem breiten Ende der zweiten Transporteinheit 42 und entsprechend oberhalb der zweiten Transporteinheit 42 sind entsprechend der Erfindung

zwei weitere Laserschneidelemente 44, 46 zu erkennen, wobei weitere Hilfslinien 24 in der gezeigten Darstellung jeweilige Aktionsradien aufzeigen. Jeweilige Laserstrahlen 26 von den beiden Laserschneidelementen 44, 46 zielen auf eine im Wesentlichen mittig auf dem anlangenden kontinuierlichen Batterieelektrodenmaterial 10 gelegene Startposition 48. Von dieser Startposition 48 verlaufen entsprechend der Erfindung dann die beiden jeweiligen Laserstrahlen 26 im Wesentlichen parallel zu den Außenkanten 50 der zweiten Transporteinheit 42, wobei der Schneidprozess entsprechend der Erfindung jeweils nicht über der zweiten Transporteinheit 42, sondern auf dem überlappenden Bereich des kontinuierlichen Batterieelektrodenmaterials 10 vollzogen wird. Bewegungspfeile 52 deuten den jeweiligen Verlauf der Laserstrahlen 26 von den Laserschneidelementen 44, 46 an. Diese spitzzulaufende zweite Transporteinheit 42 ist vorteilhaft, da sich somit während des sogenannten On-the-fly-Schnitts ein Schnittspalt gering halten lässt beziehungsweise die zu schneidende Batterieelektrode 40 während des Prozesses stabilisieren lässt. Alternativ und nicht näher dargestellt könnte eine Schrägung des Vakuumbands vorgesehen werden, wobei dann eine Spitze in auf einen zu wählenden Randbereich des kontinuierlichen Batterieelektrodenmaterials 10 weisen würde. Dies ist insbesondere dann zu favorisieren, wenn man nur einen Laser beziehungsweise Scanner für den Transversalschnitt verwenden möchte. Während der Vorwärtsbewegung des kontinuierlichen Batterieelektrodenmaterials 10 wird also besagter Transversalschnitt vollzogen, sodass während einer laufenden Bewegung jeweilige Batterieelektroden 40 final herausgeschnitten werden. Diese Batterieelektroden 40 können dann über eine weitere Transporteinheit 54 abtransportiert werden. In der gezeigten Figur 1 reiht sich die weitere Transporteinheit 54 dabei nahtlos an die zweite Transporteinheit 42 an. Die weitere Transporteinheit 54 weist dabei ein Breitenmaß auf, welches gleichgroß zu einem Breitenmaß des kontinuierlichen Batterieelektrodenmaterials 10 ist, sodass die fertig herausgeschnittene Batterieelektrode 40 vollständig auf der weiteren Transporteinheit 54 weiter befördert werden kann. Es ist also vorstellbar, dass das kontinuierliche Batterieelektrodenmaterial 10, beispielsweise in Form eines Coils, während es von den Laserschneidelementen 44, 46 geschnitten wird, bereits durch die kaskadierte zweite Transporteinheit 42 ergriffen beziehungsweise in einem mittigen Bereich des kontinuierliche Batterieelektrodenmaterials 10 ergriffen wird und so weiter in Bewegungsrichtung bewegt wird. Dabei kann der Coilvorschub zumindest teilweise als Schneidvorschub genutzt werden. Es ist also in dem vorgestellten Ausführungsbeispiel vorgesehen, dass die Laserschneidvorrichtung 18 so eingesetzt wird, dass verschiedene Laserschneidelemente 20, 22, 44, 46 eingesetzt werden, um die verschiedenen Schneidprozesse auf die jeweiligen Laserschneidelemente 20, 22, 44, 46 aufzuteilen. Die Laserschneidelemente 20, 22, 44, 46 können beispielsweise in Form von Scann-Optiken vorgesehen sein. Zudem ist in der Figur 1 eine Absaugvorrichtung 56 mit einem ersten Absaugelement 58, einem zweiten Absaugelement 60, einem dritten Absaugelement 62 und einem vierten Absaugelement 64 dargestellt. Insgesamt sind die Absaugelemente 58, 60, 62, 64 so positioniert, dass sie sich als kleine und ortsfeste Absaugungen verwenden lassen. Dabei kann der Vorschub des kontinuierlichen Batterieelektrodenmaterials 10 als Schneidvorschub genutzt werden. Somit können mit geringen Verdichter-Leistungen gute Absaugergebnisse erzeugt werden. Die Absaugelemente 62, 64 sind dabei in einer im Wesentlichen länglichen Form oberhalb des Schneidbereichs der jeweiligen Laserstrahlen 26 vorgesehen, sodass während des Transversalschnitts eine möglichst ortsgenaue Absaugung während des Bewegungsablaufs vollzogen werden kann. Der Transversalschnitt kann auch als ein On-the-fly Transversalschnitt bezeichnet werden. Die Batterieelektroden 40 werden also ohne ein Bandstillstand vollständig ausgeschnitten. Die Anordnung der Laser und der damit verbundenen Scanner-Jobsplit ist vorteilhaft, da sich somit eine Minimierung von Einkoppelvorgängen und eine Reduzierung des Spotdurchmessers erreichen lassen. Die gezeigten Anordnungen und Geometrien der einzelnen im Zuge des vorgestellten Verfahrens zu verwendenden Komponenten sind nur beispielhaft dargestellt und lassen sich in technisch vertretbaren Grenzen entsprechend variieren. Auch ist die jeweilig dargestellte Anzahl der jeweiligen Elemente nur beispielhaft dargestellt und auch hier sind weitere Varianten vorstellbar. Mittels des vorgestellten Verfahrens lassen sich somit verschiedenste Konzepte realisieren, welche zudem eine gewisse Formatflexibilität durch geringen Aufwand (Programmierung der Scanner, ohne Anlagenumbau) aufweisen.

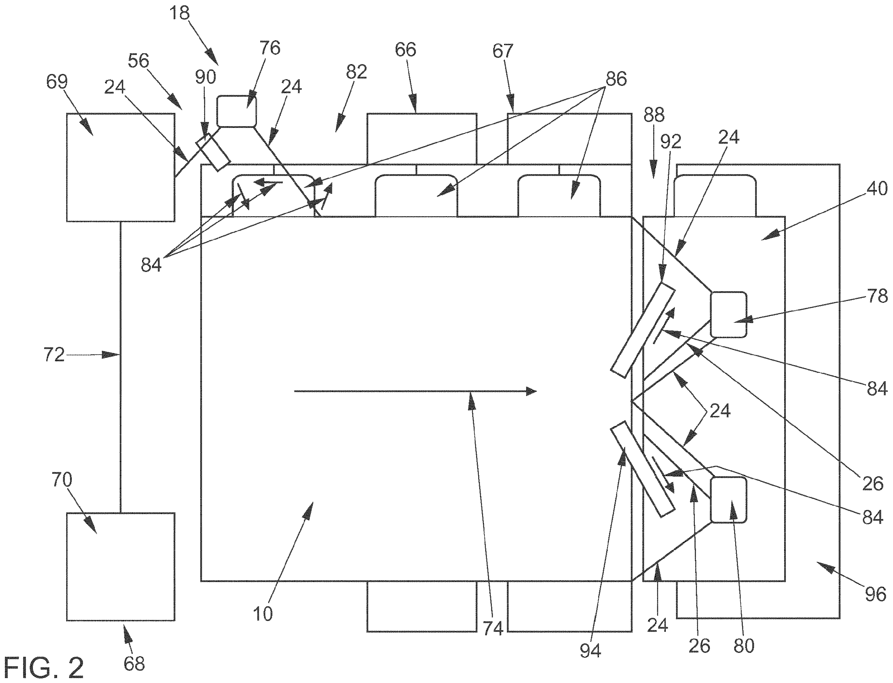

Figur 2 zeigt eine schematische Draufsicht auf ein kontinuierliches Batterieelektrodenmaterial 10, welches gemäß einer nicht zur Erfindung gehörenden Alternative von dem vorgestellten Verfahren bearbeitet wird. Dabei liegt das kontinuierliche Batterieelektrodenmaterial 10 auf zwei Walzenpaaren 66, 67 auf. Links (bezogen auf die Bildebene) des kontinuierlichen Batterieelektrodenmaterials 10 ist zudem ein weiteres Walzenpaar 68 dargestellt, wobei die einzelnen Walzen 69, 70 mittels einer Achse 72 verbunden sind. Das kontinuierliche Batterieelektrodenmaterial 10 wird also von links nach rechts bewegt und lag zunächst auf den benachbarten Walzenpaaren 68, 66. Die einzelnen Walzen 69, 70 sind dabei (wie auch die anderen Walzen der Walzenpaare 66, 67, 68) jeweils im Wesentlichen rechteckig dargestellt, wobei das kontinuierliche Batterieelektrodenmaterial 10 mittig aufgelegt wird, sodass ein jeweiliger äußerer Bereich von den Walzen 69, 70 in dieser Draufsicht zu erkennen ist, wenn das kontinuierliche Batterieelektrodenmaterial 10 noch aufliegen würde. Gemäß einem auf dem kontinuierlichen Batterieelektrodenmaterial 10 dargestellten Bewegungspfeil 74 wird das kontinuierliche Batterieelektrodenmaterial 10 über die verschiedenen Walzen, (beispielsweise mittels der verschiedenen Walzenpaare 66, 67, 68) von links nach rechts bewegt. Während dieser Vorwärtsbewegung können mit einer dargestellten Laserschneidvorrichtung 18, welche in diesem Fall Laserschneidelemente 76, 78, 80 umfasst, entsprechende Schneidprozesse durchgeführt werden. Das Laserschneidelement 76 schneidet das kontinuierliche Batterieelektrodenmaterial 10 dabei in einem Zwischenbereich 82 zwischen dem Walzenpaar 68 und dem Walzenpaar 66. Ein Aktionsradius von dem Laserschneidelement 76 ist dabei mittels Hilfslinien 24 dargestellt. Ein Laserstrahl 26 ist schematisch dargestellt, wobei Schneidbewegungspfeile 84 eine grobe Route des Laserstrahls 26 andeuten. Die Schneidbewegungspfeile 84 und die auf die Bildebene bezogene Bewegung von links nach rechts des kontinuierlichen Batterieelektrodenmaterials 10 resultiert letztendlich in den dargestellten Ableiterfähnchen 86 und den damit verbundenen Radien. Die Laserschneidelemente 78, 80 sorgen mit ihren jeweiligen Laserstrahlen 26 hingegen für den Transversalschnitt, sodass letztendlich eine fertige Batterieelektrode 40 hergestellt wird. Der jeweilige Aktionsradius der Laserschneidelemente 78, 80 ist wiederum mit Hilfslinien 24 dargestellt. Auch die Laserschneidelemente 78, 80 schneiden also in einem weiteren Zwischenbereich 88, sodass eine freie Bearbeitung ermöglicht wird. Auch in dieser Variante ist eine Absaugvorrichtung 56 vorgesehen, welche Absaugelemente 90, 92 und 94 umfasst. Die Absaugelemente 90, 92 und 94 sind dabei ähnlich der in Figur 1 ausgelegt. Insbesondere die Absaugelemente 92, 94 sind bezogen auf eine horizontale Bildebene wiederum leicht schräg versetzt dargestellt, sodass gemäß der aus der Laserbewegung und Bewegungsrichtung zusammengesetzten resultierenden Bewegungsbahn des Schneidprozesses eine stetige Absaugung möglichst nah am Schneidvorgang realisierbar ist. Auch hier zeigen Schneidbewegungspfeile 84 eine ungefähre Richtung des jeweiligen Laserstrahls 26 an. Die bereits ausgeschnittene Batterieelektrode 40 in Figur 2 liegt auf einer weiteren Transporteinheit 96, welche in Form eines Vakuumbands dargestellt ist. Diese weitere Transporteinheit 96 ist dabei größer als die aufliegende Batterieelektrode 40. Die gezeigten Anordnungen und Geometrien der einzelnen im Zuge des vorgestellten Verfahrens zu verwendenden Komponenten sind nur beispielhaft dargestellt und lassen sich in technisch vertretbaren Grenzen entsprechend variieren. Auch ist die jeweilig dargestellte Anzahl der jeweiligen Elemente nur beispielhaft dargestellt und auch hier sind weitere Varianten vorstellbar. Mittels des vorgestellten Verfahrens lassen sich somit verschiedenste Konzepte realisieren, welche zudem eine gewisse Formatflexibilität durch geringen Aufwand (Programmierung der Scanner, ohne Anlagenumbau) aufweisen.

### Bezugszeichenliste

- 10: kontinuierliches Batterieelektrodenmaterial
- 12: beschichteter Bereich
- 14: nicht beschichteter Bereich
- 16: erste Transporteinheit
- 17: Transportvorrichtung
- 18: Laserschneidvorrichtung
- 20: Laserschneidelement
- 22: Laserschneidelement
- 24: Hilfslinie
- 26: Laserstrahl
- 28: oberer Elektrodenbereich
- 30: unterer Elektrodenbereich
- 32: Blockpfeil
- 34: Sensorvorrichtung
- 36: erstes Sensorelement
- 38: zweites Sensorelement
- 40: Batterieelektrode
- 42: zweite Transporteinheit
- 44: Laserschneidelement
- 46: Laserschneidelement
- 48: Startposition
- 50: Außenkante
- 52: Bewegungspfeil
- 54: weitere Transporteinheit
- 56: Absaugvorrichtung
- 58: erstes Absaugelement
- 60: zweites Absaugelement
- 62: drittes Absaugelement
- 64: viertes Absaugelement
- 66: Walzenpaar
- 67: Walzenpaar
- 68: Walzenpaar
- 69: Walze
- 70: Walze
- 72: Achse
- 74: Bewegungspfeil
- 76: Laserschneidelement
- 78: Laserschneidelement
- 80: Laserschneidelement
- 82: Zwischenbereich
- 84: Schneidbewegungspfeil
- 86: Ableiterfähnchen
- 88: Zwischenbereich
- 90: Absaugelement
- 92: Absaugelement
- 94: Absaugelement
- 96: weitere Transporteinheit

## Patentansprüche

1. Verfahren zum Schneiden von einem kontinuierlichen Batterieelektrodenmaterial (10) zur Herstellung von Batterieelektroden (40) umfassend die folgenden Schritte:
• Bereitstellen von einem kontinuierlichen Batterieelektrodenmaterial (10);
• Bereitstellen von einer Transportvorrichtung (17), welche ausgelegt ist, das kontinuierliche Batterieelektrodenmaterial (10) in einer Bewegungsrichtung von einem Startpunkt über einen Bearbeitungsbereich zu einem Endpunkt zu bewegen, wobei die Transportvorrichtung (17) zumindest zwei Transporteinheiten (16, 42) in Form von Transportbändern umfasst;
• Bereitstellen von zumindest einer Laserschneidvorrichtung, welche zumindest zwei Laserschneidelemente (44, 46) umfasst, welche ausgelegt ist das kontinuierliche Batterieelektrodenmaterial (10) zu bearbeiten;
• Bearbeiten des kontinuierlichen Batterieelektrodenmaterials (10) während einer Bewegung in der Bewegungsrichtung mittels der zumindest einen Schneidvorrichtung, sodass zumindest ein Bearbeitungsschritt an dem kontinuierlichen Batterieelektrodenmaterial (10) durchgeführt wird, wobei
zumindest ein Breitenmaß und/oder ein Innenmaß von zumindest einer der zumindest zwei Transporteinheiten (16, 42) zumindest in einem Bereich kleiner als zumindest ein Breitenmaß und/oder ein Innenmaß von dem kontinuierlichen Batterieelektrodenmaterial (10) ist, sodass das kontinuierliche Batterieelektrodenmaterial (10) zumindest mit einem Ende einer Breitseite über das zumindest eine Transportband (16, 42) hinausragt und/oder zumindest in einem Innenbereich über das zumindest eine Transportband (16, 42) hinausragt, sodass das kontinuierliche Batterieelektrodenmaterial (10) mittels der zumindest zwei Laserschneidelemente (44, 46) in diesem Bereich und/oder zwischen den zwei Transportbändern (16, 42) frei bearbeitbar ist,
**dadurch gekennzeichnet, dass**
das Innenmaß des zumindest einen Transportbands (42) eine im Wesentlichen dreieckige Form des Transportbands in diesem Bereich darstellt, wobei eine Spitze dieser Form entgegen der Bewegungsrichtung im Wesentlichen mittig einer Breitseite des Transportbandes (42) ausgerichtet ist, wobei die Laserstrahlen von den beiden Laserschneidelementen (44, 46) auf eine im Wesentlichen mittig auf dem anlangenden kontinuierlichen Batterieelektrodenmaterial (10) gelegene Startposition (48) zielen und ein Abtrennen der Batterieelektroden (40) ausgehend von dieser Startposition im Wesentlichen parallel zu den Außenkanten der zweiten Transporteinheit (42) erfolgt,
wobei der Schneidprozess jeweils nicht über der zweiten Transporteinheit (42), sondern auf dem überlappenden Bereich des kontinuierlichen Batterieelektrodenmaterials (10) vollzogen wird.

2. Verfahren nach Anspruch 1, wobei das kontinuierliche Batterieelektrodenmaterial (10) in Form eines Coils bereitgestellt wird, wobei eine Materialbahn des Coils in einer Bewegungsrichtung von einem Startpunkt über einen Bearbeitungsbereich zu einem Endpunkt mittels der Transportvorrichtung (17) bewegt wird und wobei die Materialbahn während des Transportvorgangs seriell die zumindest zwei Transporteinheiten (16, 42) passiert.

3. Verfahren nach Anspruch 1 oder 2, wobei zumindest eine Sensorvorrichtung (34), umfassend zumindest ein Sensorelement (36, 38), bereitgestellt wird, welche ausgelegt ist das kontinuierliche Batterieelektrodenmaterial (10) vor und/oder während einer Bewegung in Bewegungsrichtung von einem Startpunkt über einen Bearbeitungsbereich zu einem Endpunkt kontinuierlich und/oder zumindest während eines Zeitpunkts zu erfassen und auszurichten, sodass das kontinuierliche Batterieelektrodenmaterial (10) in Bezug auf zumindest eine Transporteinheit (16, 42) und zumindest einem Bearbeitungsschritt ausgerichtet wird.

4. Verfahren nach einem der vorherigen Ansprüche, wobei zumindest eine Absaugvorrichtung (56), umfassend zumindest ein Absaugelement (58, 60, 62, 64), bereitgestellt wird.

5. Verfahren nach einem der vorherigen Ansprüche, wobei eine Vorschubgeschwindigkeit des kontinuierlichen Batterieelektrodenmaterials (10) zumindest teilweise als eine Schneidvorschubgeschwindigkeit genutzt wird.

6. Verfahren nach einem der vorherigen Ansprüche, wobei eine Vorschubgeschwindigkeit benutzerdefiniert eingestellt wird, insbesondere auf einen Wert von 10 m/s.

7. Verfahren nach einem der vorherigen Ansprüche, wobei eine Vorschubgeschwindigkeit von zumindest zwei Transporteinheiten (16, 42) in Bezug aufeinander benutzerdefiniert eingestellt wird, insbesondere auf einen im Wesentlichen gleichen Wert eingestellt wird.

8. Verfahren nach einem der vorherigen Ansprüche, wobei zusätzlich zumindest eine weitere Transporteinheit (54, 96) bereitgestellt wird, wobei diese weitere zumindest eine Transporteinheit (54, 96) in Form eines Transportbandes, insbesondere eines Vakuumbandes, bereitgestellt wird und ein Maß bezogen auf eine Breitseite aufweist, welches gleichgroß oder größer ist als ein Maß des kontinuierlichen Batterieelektrodenmaterials (10), insbesondere ein Maß bezogen auf eine Breitseite des kontinuierlichen Batterieelektrodenmaterials (10).

9. Verfahren nach einen der vorhergehenden Ansprüche, wobei die Transportbänder (16, 42) als Vakuumbänder ausgeführt sind.

## Claims

1. Method for cutting a continuous battery electrode material (10) for producing battery electrodes (40), comprising the following steps:
• providing a continuous battery electrode material (10);
• providing a transport device (17), which is designed to move the continuous battery electrode material (10) in a direction of movement from a starting point over a machining region to an end point, the transport device (17) comprising at least two transport units (16, 42) in the form of transport belts;
• providing at least one laser cutting device, which comprises at least two laser cutting elements (44, 46) and is designed to machine the continuous battery electrode material (10);
• machining the continuous battery electrode material (10) during a movement in the direction of movement by means of the at least one cutting device, so that at least one machining step is carried out on the continuous battery electrode material (10),
at least one width dimension and/or an internal dimension of at least one of the at least two transport units (16, 42) being smaller at least in one region than at least one width dimension and/or an internal dimension of the continuous battery electrode material (10), so that the continuous battery electrode material (10) projects, at least by one end of a broad side, beyond the at least one transport belt (16, 42) and/or projects, at least in an inner region, beyond the at least one transport belt (16, 42), so that the continuous battery electrode material (10) can be freely machined in this region and/or between the two transport belts (16, 42) by means of the at least two laser cutting elements (44, 46),
**characterized in that**
the inner dimension of the at least one transport belt (42) represents a substantially triangular shape of the transport belt in this region, a tip of this shape being aligned substantially centrally in relation to a broad side of the transport belt (42) counter to the direction of movement, the laser beams from the two laser cutting elements (44, 46) being aimed at a starting position (48) located substantially centrally on the arriving continuous battery electrode material (10), and the battery electrodes (40) being separated starting from this starting position substantially in parallel with the outer edges of the second transport unit (42),
the cutting process not being performed over the second transport unit (42), but on the overlapping region of the continuous battery electrode material (10).

2. Method according to claim 1, wherein the continuous battery electrode material (10) is provided in the form of a coil, wherein a material web of the coil is moved in a direction of movement from a starting point over a machining region to an end point by means of the transport device (17), and wherein the material web passes the at least two transport units (16, 42) in series during the transport process.

3. Method according to claim 1 or 2, wherein at least one sensor device (34), comprising at least one sensor element (36, 38), is provided, which is designed to detect and align the continuous battery electrode material (10) prior to and/or during a movement in the direction of movement from a starting point over a machining region to an end point continuously and/or at least during a point in time, so that the continuous battery electrode material (10) is aligned with respect to at least one transport unit (16, 42) and at least one machining step.

4. Method according to any of the preceding claims, wherein at least one suction device (56), comprising at least one suction element (58, 60, 62, 64), is provided.

5. Method according to any of the preceding claims, wherein a feed rate of the continuous battery electrode material (10) is used at least in part as a cutting feed rate.

6. Method according to any of the preceding claims, wherein a feed rate is adjusted in a user-defined manner, in particular to a value of 10 m/s.

7. Method according to any of the preceding claims, wherein a feed rate of at least two transport units (16, 42) is adjusted in a user-defined manner with respect to one another, in particular to a substantially identical value.

8. Method according to any of the preceding claims, wherein at least one further transport unit (54, 96) is additionally provided, wherein this further at least one transport unit (54, 96) is provided in the form of a transport belt, in particular a vacuum belt and has a dimension relative to a broad side which is equal to or greater than a dimension of the continuous battery electrode material (10), in particular a dimension relative to a broad side of the continuous battery electrode material (10).

9. Method according to any of the preceding claims, wherein the transport belts (16, 42) are designed as vacuum belts.

## Revendications

1. Procédé permettant la découpe d'un matériau d'électrodes de batterie (10) continu pour la fabrication d'électrodes de batterie (40), comprenant les étapes suivantes :
• fourniture d'un matériau d'électrodes de batterie (10) continu ;
• fourniture d'un dispositif de transport (17), lequel est conçu pour déplacer le matériau d'électrodes de batterie (10) continu dans un sens de déplacement d'un point de départ, à travers une zone de traitement, jusqu'à un point final, le dispositif de transport (17) comprenant au moins deux unités de transport (16, 42) sous la forme de bandes de transport ;
• fourniture d'au moins un dispositif de découpe au laser, lequel comprend au moins deux éléments de découpe au laser (44, 46) et lequel est conçu pour traiter le matériau d'électrodes de batterie (10) continu ;
• traitement du matériau d'électrodes de batterie (10) continu pendant un déplacement dans le sens de déplacement au moyen de l'au moins un dispositif de découpe, de sorte qu'au moins une étape de traitement est effectuée sur le matériau d'électrodes de batterie (10) continu,
au moins une dimension de largeur et/ou une dimension intérieure d'au moins l'une des au moins deux unités de transport (16, 42) étant inférieure, au moins dans une zone, à au moins une dimension de largeur et/ou une dimension intérieure du matériau d'électrodes de batterie (10) continu, de sorte que le matériau d'électrodes de batterie (10) continu fait saillie au-delà de l'au moins une bande de transport (16, 42) au moins avec une extrémité d'un côté large et/ou fait saillie au-delà de l'au moins une bande de transport (16, 42) au moins dans une zone intérieure, de sorte que le matériau d'électrodes de batterie (10) continu peut être traité librement au moyen des au moins deux éléments de découpe au laser (44, 46) dans ladite zone et/ou entre les deux bandes de transport (16, 42),
**caractérisé en ce que**
la dimension intérieure de l'au moins une bande de transport (42) représente une forme sensiblement triangulaire de la bande de transport dans ladite zone, une pointe de ladite forme étant orientée à l'encontre du sens de déplacement sensiblement au centre d'un côté large de la bande de transport (42), les faisceaux laser des deux éléments de découpe au laser (44, 46) visant une position de départ (48) située sensiblement au centre sur le matériau d'électrodes de batterie (10) continu arrivant et une séparation des électrodes de batterie (40) étant effectuée sensiblement parallèlement aux bords extérieurs de la seconde unité de transport (42) à partir de ladite position de départ,
le processus de découpe n'étant pas accompli respectivement au-dessus de la seconde unité de transport (42), mais sur la zone de chevauchement du matériau d'électrodes de batterie (10) continu.

2. Procédé selon la revendication 1, le matériau d'électrodes de batterie (10) continu étant fourni sous la forme d'une bobine, une bande de matériau de la bobine étant déplacée dans un sens de déplacement d'un point de départ, à travers une zone de traitement, jusqu'à un point final au moyen du dispositif de transport (17) et la bande de matériau passant en série sur les au moins deux unités de transport (16, 42) pendant le processus de transport.

3. Procédé selon la revendication 1 ou 2, au moins un dispositif capteur (34) comprenant au moins un élément capteur (36, 38) étant fourni, lequel est configuré pour détecter, de manière continue et/ou au moins pendant un moment, le matériau d'électrodes de batterie (10) continu avant et/ou pendant un déplacement dans un sens de déplacement d'un point de départ, à travers une zone de traitement, jusqu'à un point final et pour l'aligner de sorte que le matériau d'électrodes de batterie (10) continu est aligné par rapport à au moins une unité de transport (16, 42) et au moins une étape de traitement.

4. Procédé selon l'une des revendications précédentes, au moins un dispositif d'aspiration (56) comprenant au moins un élément d'aspiration (58, 60, 62, 64) étant fourni.

5. Procédé selon l'une des revendications précédentes, une vitesse d'avancement du matériau d'électrodes de batterie (10) continu étant utilisée au moins partiellement comme une vitesse d'avancement de découpe.

6. Procédé selon l'une des revendications précédentes, une vitesse d'avancement étant réglée de manière définie par l'utilisateur, en particulier sur une valeur de 10 m/s.

7. Procédé selon l'une des revendications précédentes, une vitesse d'avancement d'au moins deux unités de transport (16, 42) l'une par rapport à l'autre étant réglée de manière définie par l'utilisateur, en particulier étant réglée sur une valeur sensiblement égale.

8. Procédé selon l'une des revendications précédentes, au moins une autre unité de transport (54, 96) étant en outre fournie, ladite autre au moins une unité de transport (54, 96) étant fournie sous la forme d'une bande de transport, en particulier d'une bande sous vide, et présentant une dimension se rapportant à un côté large, laquelle dimension est égale ou supérieure à une dimension du matériau d'électrodes de batterie (10) continu, en particulier une dimension se rapportant à un côté large du matériau d'électrodes de batterie (10) continu.

9. Procédé selon l'une des revendications précédentes, les bandes de transport (16, 42) étant conçues comme des bandes sous vide.
